# EUROPEAN PATENT APPLICATION

(11) **EP 4 398 392 A1**
(43) Date of publication of application: **10.07.2024**
(21) Application number: 23150724.5
(22) Date of filing: 09.01.2023
(51) Int. Cl.: H01M 50/211, H01M 10/6555, H01M 50/325, H01M 50/202, H01M 50/227, H01M 50/258, H01M 50/262

(54) **BATTERY CELL SUB-ASSEMBLY, BATTERY MODULE SUB-ASSEMBLY AND BATTERY PACK**

(71) Applicant: Newfrey LLC, New Britain, CT 06053 (US)
(72) Inventor: AKBARINIA, Alireza, 35394 Gießen (DE); WILL, Peter, 35394 Gießen (DE); STAU, Bastian, 35394 Gießen (DE)
(74) Representative: SBD IPAdmin

(57) **Abstract**

Battery module and battery cell sub-assembly (12) comprising:
- a first battery cell (16) and a second battery cell (18);
- a first cartridge (12) surrounding the first battery cell (16), the first cartridge (12) comprising a top wall and two lateral walls extending between the top wall and the bottom wall, wherein the top wall and two lateral walls define the inside of the cartridge;
- a second cartridge (20) surrounding the second battery cell (18), the second cartridge comprising a top wall and two lateral walls extending between the top wall and the bottom wall, wherein the top wall and two lateral walls define the inside of the cartridge;
- at least one thermal fin (14, 22) contacting the first and/or the second battery cell (16, 18),
wherein
a rupture disk (46) is provided on a wall of the first and/or second cartridge (12, 20).

## Description

The present invention relates to a battery cell sub-assembly, a battery module sub-assembly comprising such battery cell sub-assembly and a battery pack. The field of the invention is more particularly that of batteries for hybrid or electric vehicles in which the energy is stored in a storage battery.

As the technology for electric vehicle continues to evolve, there is a need to provide improved power sources, particularly battery subassemblies, for such vehicles. For example, it is desirable to minimize the complexity and the weight of battery subassemblies, to decrease the costs associated with manufacturing and to better manage thermal propagation within such battery subassemblies.

In the present context, the terms "battery cell", "battery module", "battery section," and "battery pack" (as well as their shortened variants "cell", "module", "section", and "pack") are used to describe different levels of components of an overall battery assembly or battery apparatus. Conventionally a battery cell (for example a Li-ion battery cell) comprises a housing system and a battery cell material encapsulated within the housing system. The battery cell material includes one or more cathodes, one or more anodes, an electrolyte and a separator composed from a porous polymer or other suitable material to avoid direct contact between the electrodes. Numerous individual battery cells form the building blocks of battery modules. Multiple battery modules in turn make up a battery pack. Building units of battery module, battery module or battery pack may each be defined as a battery sub-assembly.

Each battery module mounted in a middle or large-sized battery pack is generally manufactured by stacking a plurality of battery cells with high integration. In this case, the battery cells are stacked in a state in which the battery cells are arranged at predetermined intervals such that heat generated during charge and discharge of the battery cells can be removed. For example, the battery cells may be sequentially stacked in a state in which the battery cells are arranged at predetermined intervals with a gap between each battery cell. Alternatively, in a case in which the battery cells have low mechanical strength, one or more battery cells may be mounted in a cartridge, and a plurality of cartridges may be stacked to constitute a battery module.

Coolant channels are defined between the stacked battery cells or between the stacked battery modules so that heat accumulated between the stacked battery cells or between the stacked battery modules is effectively removed. In this structure, however, it is necessary to provide a plurality of coolant channels corresponding to a plurality of battery cells with the result that the overall size of the battery module is increased.

EP4033593A1 is directed to a battery module with plurality of battery cells and an individual housing configured to receive the plurality of battery cells. The individual housing comprises an upper plate, a lower plate and side plates. Space portions are formed between the side plates. The plates are made of a metal material in order to have a high mechanical strength. The metal material has a certain weight. The space portions, depending on their dimension, can make the assembly cumbersome.

EP4024568A1 discloses a conventional battery module comprising a battery cell stack containing a plurality of battery cells, a U-shaped frame and an upper part, the battery module comprising a heat conductive resin layer between the U-shaped frame and the battery cell stack. The heat conductive resin is an additional layer which has to be added and add complexity to the manufacture.

In order to have a compact structure, EP2849275A1 discloses a battery module with battery cells sequentially arranged in a stacked state. Cartridges are provided to fix edges of the battery cells to form a battery cell stacked structure. Besides, heat transfer members are mounted between the respective battery cells, edges of the heat transfer members are fixed to the respective cartridges. The cartridges are for instance formed of a plastic resin. The structure with the cartridges holding the transfer members allows a reliable fixation and thermal transfer but there is still a need to improve such structures to make them more robust.

It is therefore an object of the present invention to provide a lightweight battery cell sub-assembly, a battery module sub-assembly and a battery pack preventing thermal propagation with a thermal management function and, a compact structure with structural stability without complicating the manufacturing process. Indeed, during the use of the battery, due to short circuit or other reasons, the internal air pressure inside the battery may rise to exceed a safe value, resulting in hidden dangers such as explosions. The present invention also aims to minimize the danger.

Accordingly, the present invention provides a battery cell sub-assembly according to claim 1. More particularly, the invention is directed to a battery cell sub-assembly comprising:
- a first battery cell and a second battery cell;
- a first cartridge surrounding the first battery cell, the first cartridge comprising a top wall and two lateral walls extending from the top wall, wherein the top wall and two lateral walls define the inside of the cartridge;
- a second cartridge surrounding the second battery cell, the second cartridge comprising a top wall and two lateral walls extending from the top wall, wherein the top wall and two lateral walls define the inside of the cartridge;
- at least one thermal fin contacting the first and/or the second battery cell;

Wherein a rupture disk is provided on a wall of the first and/or second cartridge.

Such battery cell sub-assembly forms a compact unit and when associated with other battery cell sub-assemblies provide thermal safety and pressure management function. The thermal safety is realised notably by the thermal fins with a homogeneous repartition of the temperature and the pressure management function is completed by the rupture disk integrated in the wall of the cartridges. The cartridges form a frame for the battery cell which is easy to manufacture and allowing both thermal safety and pressure management functions without increase the weight or the size of the sub-assembly.

In an embodiment, the wall provided with the rupture disk comprises a recess, and the rupture disk covers the recess.

In an alternative embodiment, the rupture disk is provided between the first and second cartridges. Thus, the rupture disk, fully integrated between two cartridges, is ideally arranged in the middle of two battery cells to react to an overpressure.

In said alternative embodiment, the first cartridge may comprise a first cut-out, the second cartridge comprises a second cut-out, the first and second cartridges are in contact to each other and are arranged such that the first cut-out and the second cut-out face each other to define a recess, and wherein the rupture-disk is arranged in the recess. The rupture disk is easily integrated and can be arranged such that it breaks or open when the pressure inside a battery module is over a pre-determined value.

The first cut-out may be arranged on the top wall of the first cartridge, and the second cut-out is arranged on the top wall of the second cartridge; The arrangement of the rupture disk on one side of the of the sub-assembly allows a better integration of the sub-assembly for instance in a pack. However, in another embodiment, many rupture disks may be arranged on different walls, different sides of the cartridges. For instance, rupture disks may be distributed around the cartridges.

In an embodiment, at least two rupture disks are arranged on the top walls of the first and second cartridges. The design of the cartridge allows an easy integration of one or several rupture disks.

In an embodiment, a rupture disk is arranged on the lateral wall of the first and/or second cartridge.

In an embodiment, the rupture disk is formed by a rectangular sheet of metal extending longitudinally along a wall of the cartridge and fixed at a first end to the cartridge, the second end being a free end such that in a rest position, the rectangular sheet of metal rests against the wall and under constraint the disk may be bent such that the second end does not contact the wall and opens a portion of the recess

In an embodiment, the thermal fin comprises a first contact layer in facing contact with the first and/or the second battery cell and a barrier layer, and wherein the thermal conductivity of the first contact layer is greater than the thermal conductivity of the barrier unit. Such a sandwiched structure provides a low thermal resistance in the plane of the fin, but a good thermal resistance in a direction normal to the fin plane (across the thickness of the fin). The sandwiched structure allows cooling of individual cells while insulting one cell from an adjacent cell. Thus, less than 20% (and even more particularly less than 4%, and even more particularly less than 1%) of the heat is transferred from one battery cell to another battery cell. This arrangement also promotes a uniform temperature within a cell or a battery cell sub-assembly.

In an embodiment, the first contact layer is L-shaped and comprises a first segment in facing contact with the first battery cell and a second segment extending sensibly orthogonal to the first segment, wherein the first segment is inside or faces the inside of the first and/or second cartridge, and the second segment extends outside of the first and/or second cartridge. The second segment forms a thermal fin foot adapted to transfer heat to a battery cooler or to the outside of the cartridge.

In an embodiment, the thermal fin is a first thermal fin in contact with the first battery cell, and wherein the battery sub-assembly further comprises a second thermal fin in contact with the second battery cell. Thus, on both side of the battery cell sub-assembly extend one thermal fin. In another embodiment, a thermal fin may be also provided between the first and the second battery cell of the battery cell sub-assembly. In another embodiment, a thermal fin may also be arranged between the first and the second battery cell.

In an embodiment, the thermal fin extends between the first and the second cartridge, and each cartridge comprises a recess with a rupture disk closing the recess.

In an embodiment, the first lateral wall and/or the second lateral wall of the cartridges comprise(s) a slot, wherein the first and the second battery cell are pouch cells, and each battery cell comprises a battery body and two cell leads, and wherein each cell lead extends outside of the cartridge through the slot. The leads are electrode terminals exposed to the outside. They extend from a cell body through the slots such as to avoid any damage and a proper positioning of the leads for their electrical connection.

In an embodiment, the cartridges are made in plastic material and comprise a rim to receive the thermal fin on one side of the cartridge. The plastic material provides insulation and allows to easily form rims, cut-outs and slots for the integration of the different elements. The plastic material is for instance a plastic resin. The thermal fin may also be fixed to the cartridge by plastic overmoulding.

In an embodiment, the first and second cartridge are connected to each other by a snap fit connection. For instance, first and second cartridges may be clipped to each other. Hooks from the first cartridge may cooperate with corresponding openings in the second cartridge such as to perform the snap fit connection. For instance, in this embodiment, no thermal fin is arranged between the first and second cartridges. A first thermal fin may be arranged at one front end of the first cartridge (opposite the second cartridge) and another thermal fin may be arranged at a front end of the second cartridge (opposite the first cartridge).

The present invention is also directed to a battery module sub-assembly according to claim 11. The battery module sub-assembly comprises notably a plurality of battery cell sub-assemblies as described, a first end plate and a second end plate, the battery cell subassemblies extending in a stacked state between the first and second end plate. The battery module sub-assembly form a robust structure, the size of which can easily be adapted to different applications or environments.

In an embodiment, a clamping rod is arranged to couple the battery cell sub-assemblies and the end plates. The clamping rod extends for instance through holes provided in the cartridges and end plates. Thus, the clamping forces can easily be determined.

In an embodiment, at least two clamping rods are provided to couple the battery cell subassemblies to each other. For instance, clamping rods are provided at two edges of the cartridges, one between the first lateral wall and the top wall, the other between the second lateral wall and the top wall.

In an embodiment, the cartridge also has a bottom wall and the lateral walls extend between the bottom wall and the top wall. In said embodiment, four clamping rods may be provided, for example at each edge of the cartridge.

The present invention is also directed to a battery pack comprising a housing, a battery cooler and at least one battery module sub-assembly as previously described wherein the battery module is arranged in the housing and the thermal fin is connected to the battery cooler. For instance, the thermal fin is directly or indirectly connected to the battery cooler. The thermal fin may be connected to the cooler by a thermal interface material.

A specific embodiment of the present invention will now be described, by way of example only and with reference to the accompanying drawings, of which:
Fig. 1 shows an exploded view of a battery cell sub-assembly according to a first embodiment of the invention;
Fig. 2A, 2B and 2C show respectively front view, top view and side view of a cartridge of the battery cell sub-assembly of Fig. 1;
Fig. 3 shows a perspective view of a battery module sub-assembly in an assembled state and comprising a plurality of battery cell sub-assemblies as depicted in Fig. 1;
Fig. 4 an exploded view of a battery cell sub-assembly according to a second embodiment of the invention;
Fig. 5 shows a perspective view of the battery cell sub-assembly of Fig. 4 in a mounted state;
Fig. 6 shows a partially exploded perspective view of a battery module sub-assembly comprising a plurality of battery cell sub-assemblies of Fig. 5;
Fig. 7 shows a perspective view of the battery module sub-assembly of Fig. 6 in an assembled state;
Fig. 8 shows another perspective view of the battery module sub-assembly of Fig. 3 or Fig. 7 in an assembled state;
Fig. 9 shows a battery pack according to the invention with a plurality of battery module sub-assemblies.

On the different figures, the same reference signs designate identical or similar elements.

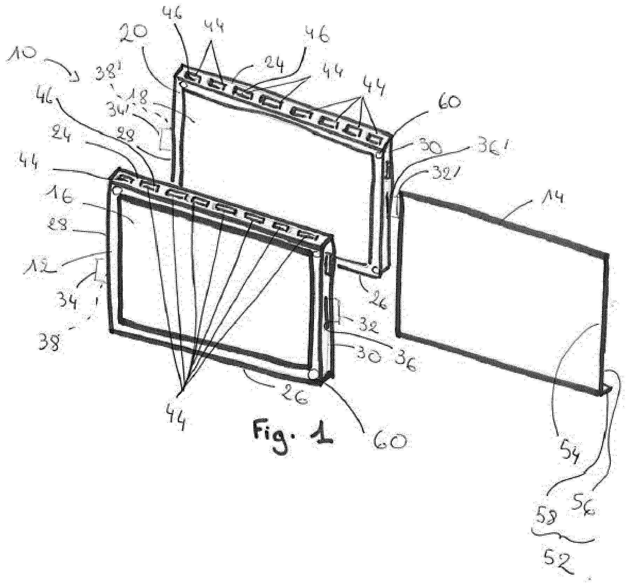

Fig. 1 shows a first embodiment of a battery cell sub-assembly 10 comprising a first cartridge 12, a first battery cell 16, a thermal fin 14, a second battery cell 18 and a second cartridge.

The first cartridge 12 comprises a top wall 24, a bottom wall 26 and two lateral walls 28, 30 extending between the top wall and the bottom wall 24, 26. However, the first cartridge may also comprise only a top wall and two lateral walls each extending from one end of the top wall. In such case, there is no bottom wall. The walls 24, 26, 28, 30 (with or without the bottom wall 26) form an open frame adapted to receive the first battery cell 16 (as disclosed below). The first cartridge 12 is integral (or integrally formed), and the walls define the inside of the cartridge. In another embodiment, the cartridge could be made of several parts. For instance, each wall could be a separate part and assembled together through snap fitting or gluing or screwing.

The first battery cell 16, in a mounted state of the battery cell sub-assembly 10 is housed inside the first cartridge 12. The frame is shaped to receive the first battery cell 16 such that the walls 24, 26, 28, 30 of the cartridge surround at least partially the first battery cell 16. The walls surround the first battery cell 16 partially when the cartridge has no bottom wall. The walls surround entirely the outskirts of the battery cell 16 when the cartridge 12 is provided with a bottom wall. The first battery cell 16 is for instance a pouch cell. In a known manner a pouch cell or pouch-shaped cell or pouch battery cell comprises a pouch pack or body in which an electrode assembly of a cathode/separator/anode and an electrolyte are arranged in a sealed state. The cathode tab is connected to a first cell lead 32 and the anode tab is connected to a second cell lead 34. The two cell leads 32, 34 extend from the body and are exposed to the outside. The first cartridge 12 comprises two slots 36, 38 to receive the cell leads 32, 34 and allows the cell leads 32, 34 to extend outside from the cartridge 12. For instance, the slots 36, 38 are arranged on the lateral walls of the first cartridge 12. A first slot 36 for the first lead 32 is arranged on the first lateral wall 28, wherein a second slot 38 for the second cell lead 34 is arranged on the second lateral wall 30. In another embodiment, the first and second slots may be arranged on the same lateral wall.

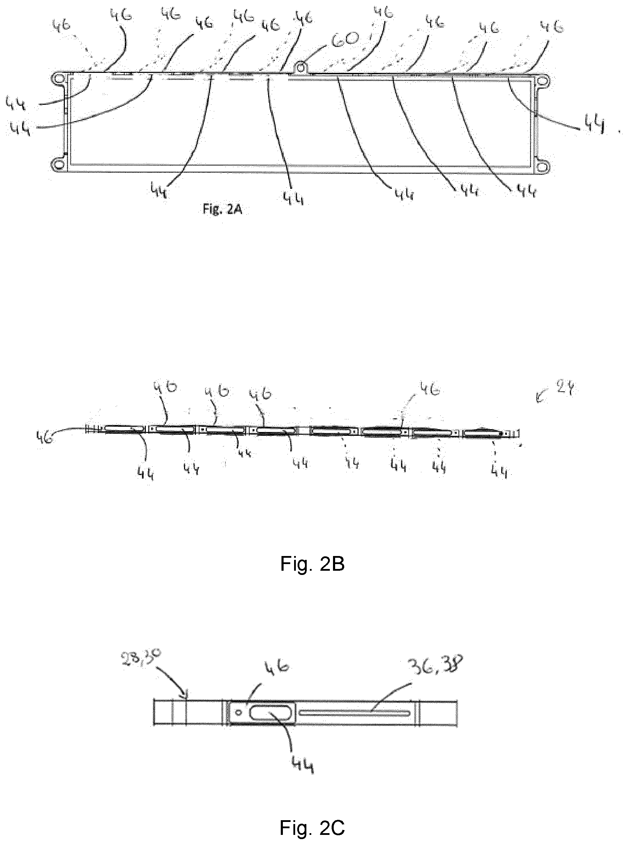

The first cartridge 12 comprises a recess 44. The recess is for instance arranged on the top wall of the first cartridge. More particularly, as visible in Fig. 1, Fig. 2B and Fig. 2C the first cartridge 12 comprises a plurality of recesses 44. For instance, eight recesses 44 are arranged on the top wall of the first cartridge 12. However, in other embodiments, the number of recesses on the top wall of the cartridge may depend on the size and performances of the battery sub-assembly. For instance, the top wall of the cartridge may comprise one or two or four or more recesses 44. The first lateral wall of the cartridge may also be provided with a recess 44. The second lateral wall of the cartridge may also be provided with a recess 44. The recesses are disposed at a non-zero distance from the edge.

The second cartridge 20 is sensibly similar to the first cartridge 12. The second cartridge 20 also comprises a top wall, a bottom wall and two lateral walls extending between the top wall and the bottom wall. However, in another embodiment, the second cartridge may not have any bottom wall. The walls form a frame. The second cartridge 20 is integral, and the walls define the inside of the cartridge 20. In another embodiment, the cartridge could be made of several parts. The second battery cell 18, in a mounted state of the battery cell sub-assembly 10 is housed inside the second cartridge such that the walls of the second cartridge 20 surround at least partially the second battery cell 16. The frame is shaped to receive the second battery cell 16. The second battery cell 16 is for instance a pouch cell with a body. Two cell leads 32', 34' extend from the body and are exposed to the outside. The second cartridge 20 comprises two slots 36', 38' to receive the cell leads 32', 34' and allows the cell leads 32', 34' to extend outside from the cartridge 20. For instance, the slots 36', 38' are arranged on the lateral walls of the second cartridge 20. A first slot 36' for the first lead 32' is arranged on the first lateral wall, wherein a second slot 38' for the second cell lead 34' is arranged on the second lateral wall. In another embodiment, the first and second slots 36', 38' may be arranged on the same lateral wall.

The second cartridge 20 may also comprise a recess 44. The recess is for instance arranged on the top wall of the second cartridge 20. More particularly, the second cartridge 20 comprises a plurality of recesses 44. For instance, eight recesses 44 are arranged on the top wall of the first cartridge 12. However, in other embodiments, the number of recesses on the top wall of the cartridge may depend on the size and performances of the battery sub-assembly. For instance, the top wall of the cartridge may comprise one or two or four or more recesses 44. The first lateral wall of the cartridge may also be provided with a recess 44. The second lateral wall of the cartridge may also be provided with a recess 44. The recesses are disposed at a non-zero distance from the edge.

Each recess 44 is adapted to receive or to cooperate with a rupture disk 46. The number of rupture disk and recesses may depend on the final emplacement of the battery module, battery pack, the number of battery cells in a module or the properties of the cell per se. The rupture disk may be in a known manner a non-reclosing pressure relief safety device designed to open by means of rupture at a predetermined value. Many patents have issued that relate to rupture disks and disks. Some of these patents relate to rupture disks that include a larger, often rectangular or square (or other) shaped disk member having a peripheral frame or border that supports it. An example of such rupture disks can be seen in US4067154, US4612739 or US2012000548. The present assembly could arrange several types of rupture disks.

The rupture disk may also be a reclosing pressure relief safety device designed to open an aperture (formed by the recess 44) in case an internal air pressure exceeds a threshold pressure. In the present embodiment, the rupture disk is a re-closing device.

The rupture disk 46 is arranged such as covering entirely its associated recess 44. As visible in Fig. 1, the rupture disk 46 may be a rectangular element. The rupture disk is for instance a rectangular shaped sheet. The rupture disk may be made of metal. For instance, the rupture disk is made of spring steel. The rupture disk 46 may be screwed, glued or snap-fitted to the cartridge, such as to align the segment and the recess. The rupture disk extends for example outside the cartridge and is fixed on the outside surface of the walls. More particularly, the rupture disk comprises a first end and a second end. The first end of the rupture disk is fixed to the cartridge, whereas the second end is a free end. The second end rests on the cartridge in a rest position (when no pressure or external forces is applied to the rupture disk) such that the recess 44 is closed. When a pressure is applied to the rupture disk from the inside of the cartridge, the second end may rise such that the rupture disk is elastically deformed (or bent) and open the recess. Thus, the overpressure inside the cartridge can be released. The rupture disks have a spring effect and reclose again after releasing pressure.

The thermal fin extends between the first and second cartridges. For instance, the thermal fin is clamped between the first and second cartridges.

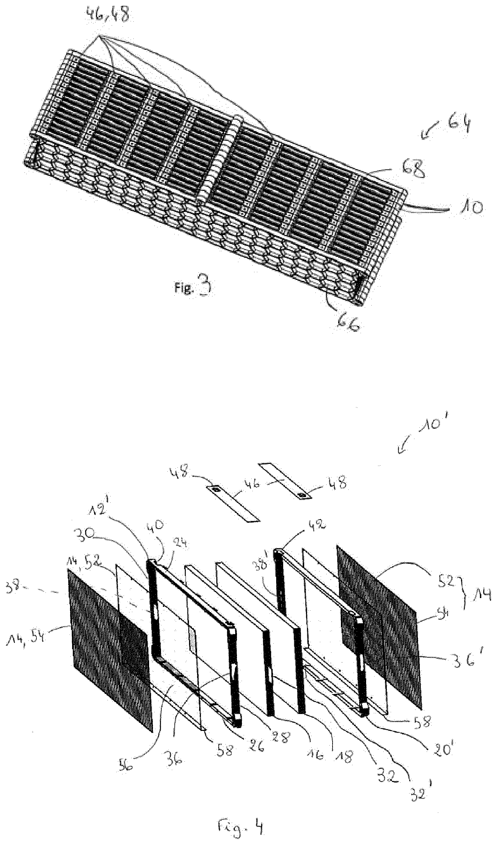

Fig. 4 shows a second embodiment of the battery cell sub-assembly 10' according to the invention. The first cartridge 12' comprises a first cut-out 40. More particularly the first cut-out 40 is provided on the top wall 24 of the first cartridge 12'. However, in other embodiment, the cut-out 40 may be arranged on other walls or a plurality of cut-outs may be arranged on different walls. The first cut-out 40 is adapted to cooperate with a second cut-out 42 provided on a second cartridge 20'.

The first and second cartridges 12', 20' cooperate, for example through a snap fit connection. Hooks may be provided on the first cartridge 12' to cooperate with openings provided on the second cartridge 20' to create the snap fit connection. In other embodiments, the first and second cartridges may be connected together through others fixation means like screwing, gluing, ... etc. When the first and second cartridges 12', 20' are connected, the first and second cut-out 40, 42 are facing each other such as to form a recess 44 (see Fig. 4, Fig. 5 and Fig. 6). More particularly, if several first and second cut-outs 40, 42 are provided, each first cut-out faces a second cut-out. In another embodiment (not depicted) the recess may be formed directly in a wall of the cartridges.

For instance, as depicted in Fig. 4, Fig. 5 or Fig. 6, each battery cell sub-assembly comprises two recesses 44. Each recess is disposed at one end of the top wall, at a non-zero distance from the edge. The recesses cooperate or are covered by a rupture disk as already disclosed in relation with the first embodiment.

As visible in Fig. 4, the battery cell sub-assembly comprises a first thermal fin 14 adjacent to the first battery cell 16 and the second thermal fin 22 adjacent to the second battery cell 18, wherein the first and second battery cells 16, 18 are adjacent to each other. However, in other embodiments, the position of the thermal fin may be different. As mentioned, only one thermal fin may be provided, adjacent to the first and/or the second battery cell, or three thermal fins may be provided one between the battery cells and one at each end of the battery cell sub-assembly. Thus, the battery cell sub-assembly comprises two cartridges surrounding two battery cells and one, two or three thermal fins, depending on the battery cell material, properties, ...

The first and/or second cartridge 12, 20, 12', 20' is for instance in a plastic resin. More generally, the cartridge is in an insulating material. The first and/or second cartridge 12, 20, 12', 20' may be manufactured by injection moulding.

The first and/or second cartridge 12, 20, 12', 20' may also have a rim to accommodate the thermal fin(s) 14. In other embodiments, the thermal fin can be connected to the cartridge through gluing or clamping. More particularly the thermal fin is adapted to be in contact, and in particular in facing contact, with at least one battery cell 16. The thermal fin 14 comprises for instance a first contact layer 52 in facing contact with the first and/or the second battery cell 16, 18. Adjacent to the first layer 52, the thermal fin further comprises a barrier layer 54. The thermal conductivity of the first contact layer 52 is greater than the thermal conductivity of the barrier layer 54.

For instance, the first layer 52 is L-shaped with a long first segment 56 and a shorter second segment 58. Edges of the first segment 56 may extend in the rim. The second segment 58 extends sensibly orthogonal to the first segment 56. The barrier layer 54 extends for instance in a plane parallel to the plane of the first segment 56 of the first layer 52. The barrier layer 54 comprises for instance only a first segment. The first segments of the barrier layer and the first contact layer are for instance glued or clamped together. In other embodiments, other fixations like snap fit, screw, .. may be used to connect the first segment of the barrier layer 54 to the first segment of the first contact layer 52. The second segment 58 of the first contact layer 52 is adapted to extend outside of the cartridge. If the cartridges comprise a bottom wall, the second segment 58 extends on the outside surface of the bottom wall of the cartridge. A gap between the outside surface of the cartridge 12, 20 and the second segment may be provided. More particularly, the second segment is not tightly connected to the bottom wall of the cartridge 12, 20. A gap exists between the bottom wall and the second segment. The cartridge may also not have any bottom wall, in such case the second segment extends for instance above the free ends of the lateral walls.

The thermal fin 14, 16 may correspond to the thermal fins described in European patent application EP22176073.9. The first contact layer 40 may be made of copper or graphite material. The barrier layer 44 may be made in paper layers and arranged such as to form insulating gaps 46. Eventually a second contact layer may be provided such that the barrier layer is arranged between the first and second contact layers. The barrier may comprise a first perforated (or having recesses) layer of paper 441, a second perforated (or having recesses) layer of paper 442 and an intermediate layer of paper 443 extending between the first and the second perforated layers 441, 442. However, other arrangements, notably as described in European patent application EP22176073.9 may be implemented or realized.

Each cartridge 12, 20, 12', 20' comprises four corner and in each or some of the corners, a hole 60 may be provided such that a clamping rod 62 can pass through the hole. In other embodiments, the hole may be provided not in the corner but along a wall for example. As depicted in Fig. 1 and Fig. 2A, the cartridges have a bottom wall and four holes 60 are provided at the four corners. A further hole is provided at the top wall of the cartridge. However, in another embodiment, only two holes, provided at the corners between the top wall and the lateral walls may be provided. In Fig. 4, four holes are provided in each corner.

The battery cell sub-assembly 10, 10' may be assembled to a plurality of other similar battery cell sub-assemblies to form a battery module sub-assembly 64, 64'. For instance, the clamping rod 62 extend in aligned holes of the cartridges to assemble them.

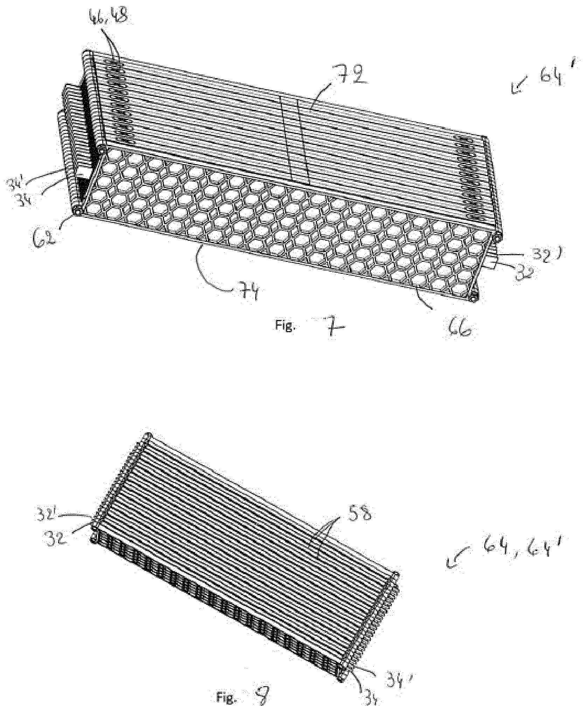

Fig. 3 shows a top view of a battery module sub-assembly 64 comprising a plurality of battery cell sub-assemblies 10 according to the first embodiment. Fig. 7 shows a top view of a battery module sub-assembly 64' comprising a plurality of battery cell sub-assemblies 10' according to the second embodiment. Fig. 8 shows a bottom view of the battery module sub-assembly 64, 64' of Fig. 7 or Fig. 3.

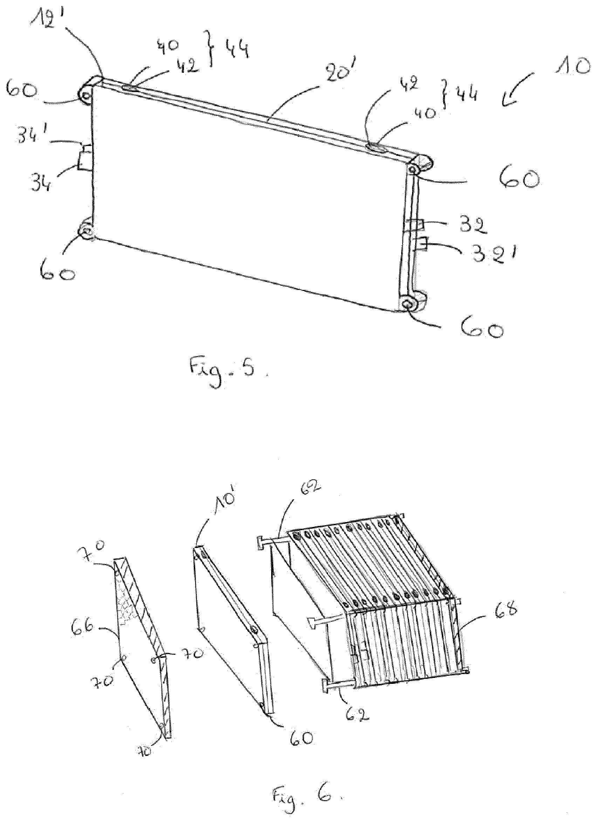

On both end sides of the plurality of battery cell sub-assemblies 10 are arranged two end plates 66, 68. The end plates 66, 68 are for instance similar or identical. Each end plate 66, 68 comprises a first surface facing the battery cell sub-assemblies 10, 10' and a second surface opposite the first surface. The end plates 66, 68 cover entirely the barrier layers 54 or the frame of the cartridge. The second surface may have a honeycomb structure for increasing the rigidity without increasing the weight of the assembly. The end plates 66, 68 each also comprises holes 70 for receiving the clamping rods extending in the holes 60 of the cartridges. The holes 70 of the end plates are designed to be aligned with the holes 60 of the battery cell sub-assemblies 10, 10', such that the clamping rode 62 can extend through the holes of the battery cell sub-assemblies and the end plates. As depicted in Fig. 6 for instance, four clamping rods 62 extend through holes provided at the corner of the cartridges and the end plates. The clamping rods allow to adjust easily the clamping forces to retain the battery cell sub-assemblies and the end plates.

As seen in Fig. 3, Fig. 7 or Fig. 8, the battery module sub-assembly 64, 64' once assembled may sensibly be parallelepipedal with a top side 72 formed by the top walls of the cartridges and two lateral walls of the end plates 66, 68. The rupture disks 46 are visible from the top side 72. The cell leads 32, 32', 34, 34' extend outside from the cartridges 12, 20 through the lateral walls. The bottom side 74 formed by the bottom walls of the cartridges is visible in Fig. 8. The second segment 58 of the first contact layer 52 is also visible from the bottom side, since they extend outside of the cartridge 12, 20. When the internal air pressure inside the battery module sub-assembly 64, 64' exceeds a threshold value, the rupture disk opens, such that the pressure is released through the recess 44. More particularly, the second end of the metal sheet rises such that a portion of the recess opens (see dotted line in Fig. 2A).

For the first embodiment, as visible in Fig. 1 to Fig. 3, the isolated cartridge being each provided with a rupture disk and the presence of a thermal fin between the cartridges allow to relieve the pressure of one cartridge/one cell. Thus, if one particular cell explodes or is damaged, the adjacent cells, due to the presence of the thermal fins on both sides of the cell and the rupture disk, may not be affected by the damaged cell.

For the second embodiment, as visible in Fig. 4 to Fig. 7, two cartridges with two cells form a unit and the presence of the rupture disk and the thermal fins on each side of the unit allow to relieve the pressure of one unit. Thus, if one unit is damaged, the adjacent units may not be affected by the damaged unit.

The first and second embodiments enable a compartmentalization of the battery module sub-assembly, improving its global performance and robustness. Besides, these embodiments decrease the risk of explosion within a battery module or a battery pack.

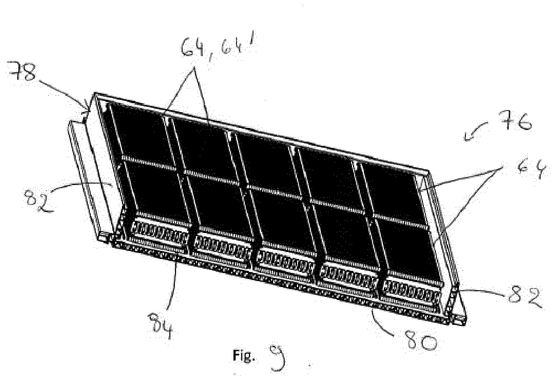

Fig. 9 shows a battery pack 76 comprising a housing 78 and a plurality of battery module sub-assemblies 64, 64'. The number of battery module sub-assemblies 64, 64' depends on the size of the battery pack 76 and is based on desired output and capacity. The housing 78 comprises for instance a housing bottom 80 and housing lateral walls 82. The walls form an opening, and the battery module sub-assemblies 64 can be arranged in the opening. A cooler 84 may be arranged between the housing bottom 80 and the bottom side 74 of the battery module sub-assemblies such that the second segment of the first contact layer contacts the cooler 84. In other words, the thermal fin, through its first contact layer 52 contacts the cooler 84. Thus, the first contact layer is in direct contact with the cooler and can transfer the heat from the battery cell to the cooler. In another embodiment, the first contact layer may contact the cooler 84 through thermal interface material.
battery cell sub-assembly 10, 10'
a first cartridge 12, 12'
a first thermal fin 14
a first battery cell 16
a second battery cell 18
a second cartridge 20
a second thermal fin 22
top wall 24
   a bottom wall 26
   two lateral walls 28, 30
first cell lead 32, 32'
second cell lead 34, 34'
slots 36, 38, 36', 38'
first cut-out 40
second cut-out 42
recess 44
rupture disk 46
first contact layer 52
barrier layer 54
first segment 56
second segment 58
hole 60
clamping rod 62
battery module sub-assembly 64, 64'
end plates 66, 68
holes 70
top side 72
bottom side 74
battery pack 76
housing 78
housing bottom 80
housing lateral walls 82
cooler 84

## Claims

1. Battery cell sub-assembly (10) comprising:
- a first battery cell (16) and a second battery cell (18);
- a first cartridge (12) surrounding the first battery cell (16), the first cartridge (12) comprising a top wall, and two lateral walls extending from the top wall, wherein the top wall and two lateral walls define the inside of the cartridge;
- a second cartridge (20) surrounding the second battery cell (18), the second cartridge comprising a top wall, and two lateral walls extending from the top wall, wherein the top wall and two lateral walls define the inside of the cartridge;
- at least one thermal fin (14, 22) contacting the first and/or the second battery cell (16, 18),
**Characterized in that**
a rupture disk (46) is provided on a wall of the first and/or second cartridge (12, 20).

2. Battery cell sub-assembly (10) according to claim 1, wherein the top wall and/or the lateral wall of the first cartridge comprises a recess, wherein the rupture disk covers the recess.

3. Battery cell sub-assembly (10) according to claim 1 or claim 2, wherein the rupture disk is formed by a rectangular sheet of metal extending longitudinally along a wall of the cartridge and fixed at a first end to the cartridge, the second end being a free end such that in a rest position, the rectangular sheet of metal rests against the wall and under constraint the disk may be bent such that the second end does not contact the wall.

4. Battery cell sub-assembly (10) according to any of claims 1 to 3, wherein at least two rupture disks (46) are arranged on the top walls of the first cartridge and two rupture disks (46) are arranged on the top walls of the second cartridges (12, 20), and wherein at least one rupture disk is arranged on each lateral wall.

5. Battery cell sub-assembly (10) according to any of claims 1 to 4, wherein the thermal fin (14, 22) comprises a first contact layer (52) in facing contact with the first and/or the second battery cell and a barrier layer (54), and wherein the thermal conductivity of the first contact layer is greater than the thermal conductivity of the barrier unit.

6. Battery cell sub-assembly (10) according to claim 5, wherein the first contact layer (52) is L-shaped and comprises a first segment (56) in facing contact with the first battery cell and a second segment (58) extending sensibly orthogonal to the first segment, wherein the first segment is inside or faces the inside of the first and/or second cartridge, and the second segment extends outside of the first and/or second cartridge (12, 20).

7. Battery cell sub-assembly (10) according to any of claims 1 to 6, wherein the thermal fin is a first thermal fin (14) in contact with the first battery cell, and wherein the battery sub-assembly further comprises a second thermal fin (22) in contact with the second battery cell.

8. Battery cell sub-assembly (10) according to any of claims 1 to 7, wherein the first lateral wall and/or the second lateral wall of the cartridges comprise(s) a slot (36, 36', 38, 38'), wherein the first and the second battery cell (16, 18) are pouch cells, and each battery cell comprises a battery body and two cell leads (32, 32', 34, 34'), and wherein each cell lead extends outside of the cartridge through the slot.

9. Battery cell sub-assembly (10) according to any of claims 1 to 8, wherein the cartridges are made in plastic material.

10. Battery cell sub-assembly (10) according to any of claims 1 to 9, wherein the thermal fin is sandwiched between the first and the second cartridge.

11. Battery cell sub-assembly (10) according to claim 1, wherein the rupture disk (46) is provided between the first and the second cartridge (12, 20), and wherein the first cartridge (12) comprises a first cut-out (40), the second cartridge (20) comprises a second cut-out (42), the first and second cartridges (12, 20) are in contact to each other and are arranged such that the first cut-out and the second cut-out face each other to define a recess (44), and wherein the rupture-disk (46) is arranged in the recess (44).

12. Battery cell sub-assembly (10) according to claim 11, wherein the first and second cartridge (12, 22) are connected to each other by a snap fit connection.

13. Battery module sub-assembly (64) comprising a plurality of battery cell subassemblies (10) according to any of claims 1 to 12, a first end plate (66) made of plastic material, a second end plate (68) made of plastic material, the battery cell subassemblies (10) extending in a stacked state between the first and second end plate (66, 68).

14. Battery module sub-assembly (64) according to claim 13, wherein a clamping rod (62) is arranged to couple the battery cell subassemblies (10) and the end plates (66, 68).

15. Battery pack (76) comprising a housing (78), a battery cooler (84) and at least one battery module sub-assembly (64) according to any of claims 11 to 13, wherein the battery module sub-assembly (64) is arranged in the housing and the thermal fin (14, 22) is connected to the battery cooler.
